# EUROPÄISCHE PATENTSCHRIFT

(11) **EP 2 474 794 B1**
(45) Veröffentlichungstag und Bekanntmachung des Hinweises auf die Patenterteilung: **09.04.2014**
(21) Anmeldenummer: 11150314.0
(22) Anmeldetag: 06.01.2011
(51) Int. Cl.: F24J 2/04, F24J 2/52

(54) **Dichtungsplatte**
Seal board
Plaque d'étanchéité

(43) Veröffentlichungstag der Anmeldung: 11.07.2012
(73) Patentinhaber: FibreCem Holding AG, 8867 Niederurnen (CH)
(72) Erfinder: Sele, Thomas, 9495, Triesen (CH)
(74) Vertreter: Troesch Scheidegger Werner AG

(56) Entgegenhaltungen:
- EP-A1- 1 798 357
- DE-A1-102005 059 487
- GB-A- 2 189 526
- JP-A- 57 047 153
- JP-A- 2007 146 596
- US-A1- 2010 307 074

## Beschreibung

Die vorliegende Erfindung betrifft eine Dichtungsplatte nach dem Oberbegriff von Anspruch 1. Derartige Dichtungsplatten werden beispielsweise in einer geschuppten Dacheindeckung zur Befestigung von Aufdachmontagen, z.B. Befestigung von Solarpanelen, verwendet. Bei dafür herkömmlich verwendeten Dichtungsplatten kann es dabei zu unerwünschtem Eindringen von Feuchtigkeit über die Dacheindeckung in die Dachkonstruktion kommen.

So ist beispielsweise aus DE 10 2005 059 487 ein Halterungssystem für dachseitige Montage bekannt, welches eine Montageplatte vorsieht, welche anstelle eines Dachziegels in den Dachziegelverbund eingesetzt wird und auch als Dichtungsplatte dient. Auch aus JP 2007 146596 und EP 1 798 357 sind weitere derartige Ausführungsformen von Montageplatten von Halterungssystemen bekannt, deren Montageplatten entweder jeweils mindestens einen Dachziegel des Dachziegelverbundes ersetzen oder mindestens eine grössere Abmessung als diese aufweisen.

US 2010/307074 A1 offenbart eine Dichtungsplatte gemäß dem Oberbegriff des Anspruchs 1.

Eine Aufgabe der vorliegenden Erfindung bestand darin, eine kompakte Dichtungsplatte zur Montage in eine besthende Dacheindeckung bereitzustellen, welche ein Eindringen von Kapillarwasser in die Dachkonstruktion verhindert und einen zuverlässigen Feuchteschutz ermöglicht.

Die Aufgabe wird durch die Merkmale von Anspruch 1 gelöst. Weitere Ausführungsformen der Erfindung sind in den abhängigen Ansprüchen dargestellt. Eine erfindungsgemässe Dichtungsplatte zur Anordnung zwischen schuppenartig zueinander versetzt angeordneten Dacheindeckungselementen einer Dacheindeckung, wobei die Dichtungsplatte eine Ausbeulung mit einer Öffnung zur Aufnahme eines Befestigungsmittels aufweist, weist im Wesentlichen eine rechteckige Form auf und die Ausbeulung ist kegelstumpfartig oder kugelförmig ausgebildet von der Oberseite der Dichtungsplatte abragend ausgebildet. Dabei ist die Öffnung der Ausbeulung entlang einer zentralen Längsachse der Dichtungsplatte in einem Bereiche des unteren drittels der Dichtungsplatte angeordnet und mindestens drei Kanten der Dichtungsplatte weisen jeweils einen zur Unterseite abragenden, geraden Kragen auf, welcher entlang den mindestens drei Kanten über ihre gesamte Länge durch gehend verläuft.

Dies bewirkt, dass bei der Verwendung in einer Dacheindeckung die Dichtungsplatte nicht direkt auf ein Dacheindeckungselement (z.B. Zementfaserplatte) zu liegen kommt und dadurch kein Kapillarwasser in unerwünschter Weise in die Dachkonstruktion eindringen kann.

Eine noch weitere erfindungsgemässe Ausführungsform ist, dass die Dichtungsplatte mindestens zwei bis dreimal so lang wie breit ausgebildet ist.

Eine weitere erfindungsgemässe Ausführungsform ist, dass die Bodenfläche der Dichtungsplatte flach und/oder profiliert ausgebildet ist.

Eine weitere Ausführungsform ist, dass die Dichtungsplatte aus Metall ist.

Verwendung einer erfindungsgemässen Dichtungsplatte in einer Dacheindeckung, insbesondere in einer geschuppten Dacheindeckung.

Ein weiterer Aspekt der Erfindung betrifft eine Anordnung mit mindestens einem Dacheindeckungselement und einem Befestigungsmittel zur Befestigung einer Aufdachmontage, wobei der obere Bereich einer erfindungsgemässen Dichtungsplatte teilweise unter mindestens einem ersten Dacheindeckungselement einer geschuppten Dacheindeckung liegend angeordnet ist. Dabei ist der Bereich mit der Ausbeulung auf einer Oberseite eines weiteren Dacheindeckungselementes angeordnet und das Befestigungsmittel ist durch die Öffnung der Ausbeulung hindurch geführt angeordnet.

Ausführungsbeispiele der vorliegenden Erfindung werden nachstehend anhand von Figuren noch näher erläutert. Es zeigen
- Fig. 1: schematisch, eine erfindungsgemässe Dichtungsplatte;
- Fig. 2: schematisch, ein Schnitt entlang einer Linie A-A gemäss Figur 1;
- Fig. 3: schematisch, eine Dacheindeckung versehen mit erfindungsgemässen Dichtungsplatte; und
- Fig. 4: schematisch, ein Vertikalschnitt gemäss Figur 3.

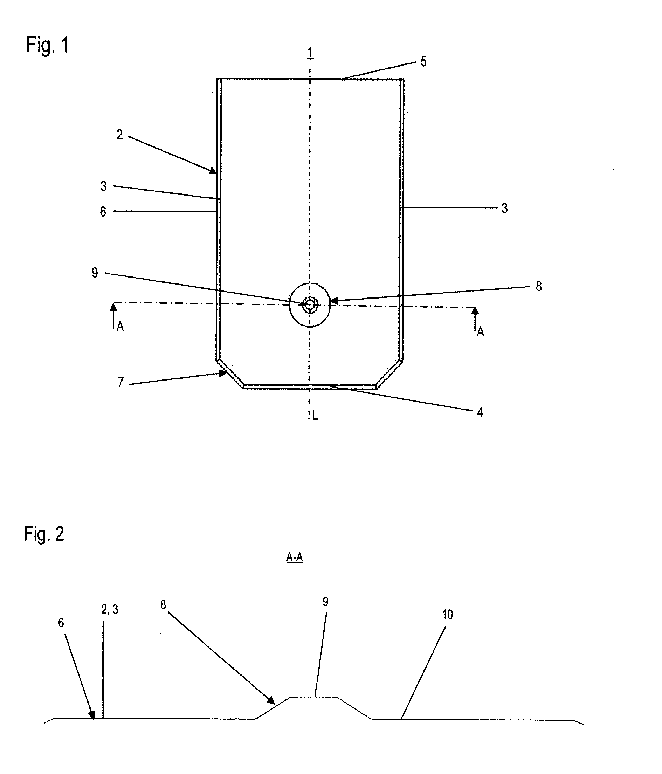

Figur 1 zeigt schematisch eine erfindungsgemässe Dichtungsplatte 1. Die erfindungsgemässe Dichtungsplatte 1 ist im Wesentlichen rechteckig ausgebildet und weist an drei ihrer vier Kanten 2, nämlich entlang von beiden Längsseiten 3 und an einer 4 der Kurzseiten 4, 5 jeweils einen nach unten abragenden Kragen oder Flansch 6 auf.

Dies bewirkt, dass die Dichtungsplatte bei der Montage nicht direkt auf ein Dacheindeckungselement (nicht dargestellt in Figur 1) zu liegen kommt und dadurch kein Kapillarwasser in unerwünschter Weise in die Dachkonstruktion eindringen kann. Weiter weist die Dichtungsplatte 1 eine schuppenförmige Gestalt mit teilweise abgeschrägten Eckkanten 7 auf. Die Eckkanten 7 sind ebenfalls mit dem nach unten abragenden Kragen 6 versehen. Es ist auch denkbar, dass die Dichtungsplatte 1 mit abgerundeten oder etwa rechtwinkligen Eckkanten 7 ausgebildet ist. Eine Ausbeulung 8 weist eine zentrale Öffnung 9 zum Durchführen eines Befestigungsmittels auf (nicht dargestellt in Figur 1). Die Ausbeulung 8 ist entlang einer zentralen Längsachse L der Dichtungsplatte 1 etwa in einem Bereich des unteren Drittels der Dichtungsplatte 1 angeordnet.

Figur 2 zeigt einen Schnitt entlang einer Linie A-A gemäss Figur 1. Dabei sind die Kanten 2 der Längsseiten 3 mit dem nach unten abragenden Kragen 6 oder Flansch dargestellt. Der Kragen 6 ragt dabei in entgegengesetzter Richtung zur Ausbeulung 8 hin von den Längskanten 3 ab. Weiter ist die kegelstumpfartig ausgeformte Ausbeulung 8 mit ihrer Öffnung 9 dargestellt. Es ist auch denkbar, dass die Ausbeulung 8 eine andere beliebige Form, wie beispielsweise eine halbkugelförmige oder kugelförmige Gestalt aufweist. Eine Oberseite im Bereich der Öffnung 9 der Ausbeulung 8 ist dabei jeweils abgeflacht ausgebildet. Eine Bodenfläche 10 der Dichtungsplatte 1 ist flach ausgebildet. Es ist aber auch denkbar, dass die Bodenfläche 10 flach und/oder profiliert ausgebildet ist.

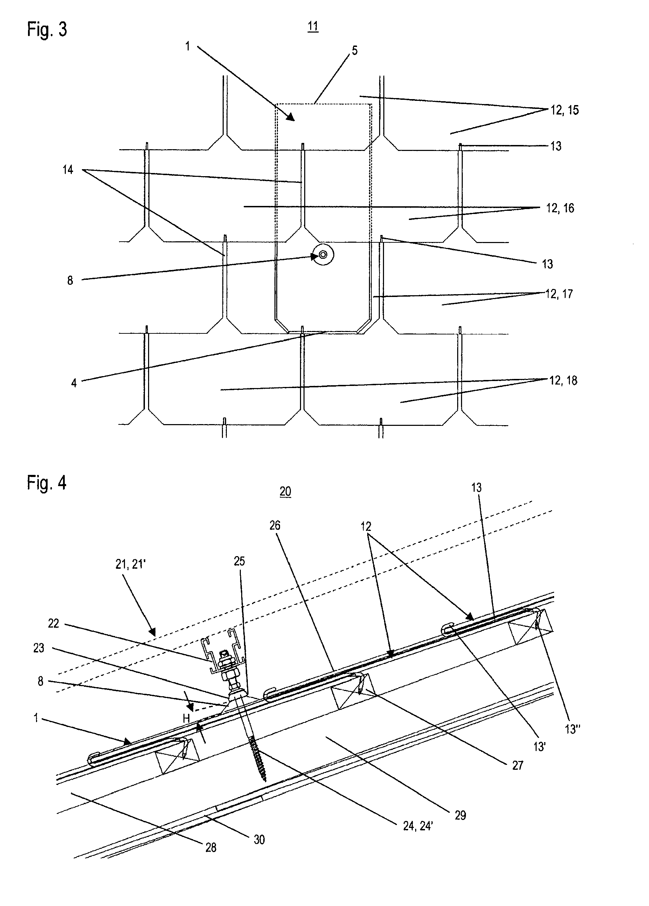

Figur 3 zeigt schematisch, eine Dacheindeckung 11, welche mit einer erfindungsgemässen Dichtungsplatte 1 versehen ist. Die Dacheindeckung 11 weist mehrere schuppenartig zueinander versetzt angeordnete Dacheindeckungselemente 12 auf. Die Dacheindeckungselemente 12 sind jeweils einander teilweise überlappend angeordnet, wobei jedes der Dacheindeckungselemente 12 in einen entsprechenden Befestigungshaken 13 eingehängt ist. Dabei überlappen erste Dacheindeckungselemente 15 mit ihrer Unterkante teilweise davon darunter angeordnete zweite Dacheindeckungselemente 16. Die zweiten Dacheindeckungselemente 16 wiederum überlappen teilweise mit ihrer Unterkante davon darunter angeordnete dritte Dacheindeckungselemente 17 bzw. das dritte Dacheindeckungselement 17 überlappt teilweise ein viertes Dacheindeckungselement 18 usw. und bilden dadurch die schuppenartige Dacheindeckung 11. Zwischen den Dacheindeckungselementen 12 ist jeweils ein Spalt 14 oder eine Fuge ausgebildet. Die Dacheindeckungselemente 12 können aus Faserzement, Naturschiefer sein oder als Dachziegel oder profilierte Platten ausgebildet sein. Die erfindungsgemässe Dichtungsplatte 1 ist mit seiner oberen Kurzseite 5 teilweise unterhalb des ersten Dacheindeckungselements 15 sowie teilweise unterhalb des zweiten Dacheindeckungselementes 16 angeordnet bzw. teilweise unter das jeweilige Dacheindeckungselements 15, 16 geschoben. Etwa ein Drittel der erfindungsgemässen Dichtungsplatte 1 ragt aus dem zweiten Dacheindeckungselement 16 hervor und dabei ist dieser Drittel auf einer Oberseite des dritten Dacheindeckungselementes 17 angeordnet. Die untere Kurzseite 4 der Dichtungsplatte 1 ist praktisch bündig mit einer Unterkante des dritten Dacheindeckungselementes 17. Die Kurzseite 4 der Dichtungsplatte 1 wird dabei wie die Unterkante des Dacheindeckungselementes 17 von einem gebogenen Ende des entsprechenden Befestigungshakens 13 gehalten. Die Kurzseite 4 der Dichtungsplatte 1 kann aber auch über die Unterkante des Dacheindeckungselementes 17 hinaus ragen. Die Verlegung der Dacheindeckungselemente 12 kann dabei unabhängig von der Position der Fugen 14 erfolgen. Weiter ist die Ausbeulung 8 der erfindungsgemässen Dichtungsplatte 1 dargestellt.

Figur 4 stellt schematisch einen Vertikalschnitt gemäss Figur 3 dar. Figur 4 zeigt die erfindungsgemässe Dichtungsplatte 1 in einer Anordnung 20 mit der Aufdachmontage 21, beispielsweise in Form des Solarpanels 21'. Eine Montagevorrichtung 22 ist mit einem Rahmen zur Aufnahme des Solarpanels 21' verbunden. Weiter ist die stumpfkegelförmige Ausbeulung 8 der Dichtungsplatte 1 dargestellt. Die Öffnung 9 der Ausbeulung 8 nimmt ein Dichtungselement 23, z.B. in Form eines Dichtungsrings, sowie ein darin geführtes Befestigungsmittel 24, beispielsweise in Form einer Stockschraube 24' in sich auf. Ein Dichtpunkt 25 liegt dabei oberhalb einer wasserführenden Schicht 26, derart dass eine Höhe H der Ausbeulung die wasserführende Schicht 26 überragt. Unter der wasserführenden Schicht ist die Aussenseite der Dacheindeckung zu verstehen. Ausserdem ist das Dichtungselement 1 derart in seiner Längen- und Breitenabmessung dimensioniert, dass kein Wasser (z.B. über die wasserführende Schicht abfliessendes Regenwasser) über die zentrale Öffnung 9 der Ausbeulung 8 ins Innere der Dacheindeckung 11 eindringen kann. Die Dichtungsplatte 1 ist mindestens etwa zwei bis dreimal so lang wie breit.

Dabei kann das Dichtungselement 1 beispielsweise eine Breite von etwa 24 cm und eine Länge etwa zwischen 40 cm und 72 cm aufweisen. Die Abmessungen der Ausbeulung 8 weisen etwa einen Durchmesser von etwas 5,5 cm auf, wobei ein Durchmesser der Öffnung 9 etwa 1, 2 cm beträgt und der Dichtpunkt 25 etwa auf der Höhe H der Ausbeulung 8 von etwa 1 cm angeordnet ist. Die Dichtungsplatte 1 kann dabei aus Metall in Form eines Dichtungsbleches ausgebildet sein.

Weiter sind in Figur 4 die Befestigungshaken 13 mit ihren gebogenen Enden 13', 13" dargestellt. Das erste gebogene Ende 13' umfasst die Unterkante des jeweiligen Dacheindeckungselementes 12, welches versetzt oberhalb des nächsten Dacheindeckungselementes 12 angeordnet ist. Das zweite gebogene Ende 13" ist in einer Lattung 27 verankert. Zwischen den Dacheindeckungselementen 12 und der Lattung 27 ist eine Hinterlüftungsebene 28 der Dacheindeckung 11 ausgebildet. Die Dacheindeckungselemente 12 liegen auf den Lattungen 27. Unterhalb den Lattungen 27 ist eine Konterlatte 29 angeordnet, wobei ein Abschnitt mit der Spitze der Stockschraube 24' mit der Konterlatte 29 verschraubt ist. Unterhalb der Konterlatte 29 ist weiter ein Unterdach 30 angeordnet.

## Patentansprüche

1. Dichtungsplatte (1) zur Anordnung zwischen schuppenartig zueinander versetzt angeordneten Dacheindeckungselementen (12;15;16;17;18) einer Dacheindeckung (11), wobei die Dichtungsplatte (1) eine Ausbeulung (8) mit einer Öffnung (9) zur Aufnahme eines Befestigungsmittels (24;24') aufweist, wobei die Dichtungsplatte (1) im Wesentlichen eine rechteckige Form aufweist und die Ausbeulung kegelstumpfartig oder kugelförmig ausgebildet von der Oberseite der Dichtungsplatte (1) abragend ausgebildet ist, wobei die Öffnung (9) der Ausbeulung (8) entlang einer zentralen Längsachse (L) der Dichtungsplatte (1) in einem Bereich des unteren Drittels der Dichtungsplatte (1) angeordnet ist **dadurch gekennzeichnet, dass** mindestens drei Kanten (2) der Dichtungsplatte (1) jeweils einen zur Unterseite abragenden, geraden Kragen (6) aufweisen, welcher entlang den mindestens drei Kanten (2) über ihre gesamte Länge durchgehend verläuft.

2. Dichtungsplatte (1) nach Anspruch 1 , **dadurch gekennzeichnet, dass** die Dichtungsplatte (1) mindestens zwei bis dreimal so lang wie breit ausgebildet ist.

3. Dichtungsplatte (1) nach einem der Ansprüche 1 bis 2, **dadurch gekennzeichnet, dass** die Bodenfläche (10) der Dichtungsplatte (1) flach und/oder profiliert ausgebildet ist.

4. Dichtungsplatte (1) nach einem der Ansprüche 1 bis 3, **dadurch gekennzeichnet, dass** die Dichtungsplatte (1) aus Metall ist.

5. Verwendung einer Dichtungsplatte (1) nach einem der Ansprüche 1 bis 4 in einer Dacheindeckung (11), insbesondere in einer geschuppten Dacheindeckung.

6. Anordnung mit mindestens einem Dacheindeckungselement (12;15;16;17;18) und einem Befestigungsmittel (24;24') zur Befestigung einer Aufdachmontage (21), **dadurch gekennzeichnet, dass** der obere Bereich einer Dichtungsplatte (1) nach einem der Ansprüche 1 bis 4 teilweise unter mindestens einem ersten Dacheindeckungselement (15) einer geschuppten Dacheindeckung (11) liegend angeordnet ist und der Bereich mit der Ausbeulung (8) auf einer Oberseite eines weiteren Dacheindeckungselementes (17) angeordnet ist und das Befestigungsmittel (24;24') durch die Öffnung (9) der Ausbeulung (8) hindurch geführt angeordnet ist.

## Claims

1. Sealing board (1) adapted to be sandwiched between roofing elements (12, 15, 16, 17, 18) of a roofing (11), said roofing elements being offset to each other imbricative, wherein that sealing board (1) comprises a buckling (8) having an aperture (9) for receiving a connecting means (24, 24'), wherein said sealing board (1) has a substantially rectangular shape, and wherein said buckling protrudes from the surface of the sealing board (1) and is formed truncated-like or ball-like, wherein the aperture (9) of the buckling (8) is arranged along a center longitudinal axis (L) of the sealing board (1) in a portion of the lower one-third of the sealing board (1), **characterized in that** each of at least three corners (2) of the sealing board (1) comprises a straight collar (6) protruding towards the bottom side, extending along the at least three corners (2) across the total length.

2. Sealing board (1) according to claim 1, **characterized in that** the length of the sealing board (1) equals two times to three times the width of the sealing board.

3. Sealing board (1) according to claim 1 or 2, **characterized in that** the bottom surface (10) of the sealing board (1) is formed flat and/or contoured.

4. Sealing board (1) according to one of claims 1 to 3, **characterized in that** the sealing board (1) is made of metal.

5. Usage of a sealing board (1) according to one of claims 1 to 4 in a roofing (11), in particular an imbricated roofing.

6. Arrangement comprising at least one roofing element (12, 15, 16, 17, 18) and a connecting means (24, 24') for connecting a roof-mounted installation (21), **characterized in that** the upper portion of a sealing board (1) according to one of claims 1 to 4 is arranged beneath at least one first roofing element (15) of an imbricated roofing (11), and the portion comprising the buckling (8) is arranged on a surface of a further roofing element (17), and wherein the connecting means (24, 24') is arranged to extend across the aperture (9) of the buckling (8).

## Revendications

1. Plaque d'étanchéité (1) destinée à être agencée entre des éléments de couverture de toit (12 ; 15 ; 16 ; 17 ; 18) d'une couverture de toit (11) disposés de manière décalée les uns par rapport aux autres à la manière d'écailles, sachant que la plaque d'étanchéité (1) présente un renflement (8) doté d'un orifice (9) servant à recevoir un moyen de fixation (24 ; 24'), sachant que la plaque d'étanchéité (1) présente essentiellement une forme rectangulaire et que le renflement est réalisé en forme de cône tronqué selon une forme sphérique tout en dépassant du côté supérieur de la plaque d'étanchéité (1), sachant que l'orifice (9) du renflement (8) est agencé dans une zone du tiers inférieur de la plaque d'étanchéité (1), le long d'un axe longitudinal (L) central de la plaque d'étanchéité (1), **caractérisée en ce qu'**au moins trois arêtes (2) de la plaque d'étanchéité (1) présentent respectivement un rebord (6) droit dépassant par rapport au côté inférieur, lequel rebord s'étend en continu le long des trois arêtes (2) ou plus, sur la totalité de leur longueur.

2. Plaque d'étanchéité (1) selon la revendication 1, **caractérisée en ce que** la longueur de la plaque d'étanchéité (1) est égale à deux à trois fois sa largeur.

3. Plaque d'étanchéité (1) selon l'une quelconque des revendications 1 à 2, **caractérisée en ce que** la surface inférieure (10) de la plaque d'étanchéité (1) est réalisée de manière à être plate et/ou profilée.

4. Plaque d'étanchéité (1) selon l'une quelconque des revendications 1 à 3, **caractérisée en ce que** la plaque d'étanchéité (1) est en métal.

5. Utilisation d'une plaque d'étanchéité (1) selon l'une quelconque des revendications 1 à 4 dans une couverture de toit (11), en particulier dans une couverture de toit en écailles.

6. Ensemble comprenant au moins un élément de couverture de toit (12 ; 15 ; 16 ; 17 ; 18) et un moyen de fixation (24 ; 24') servant à la fixation d'un montage sur toiture (21), **caractérisé en ce que** la zone supérieure d'une plaque d'étanchéité (1) selon l'une quelconque des revendications 1 à 4 est agencée à l'horizontale en partie sous au moins un premier élément de couverture de toit (15) d'une toiture en écailles (11), et **en ce que** la zone dotée du renflement (8) est agencée sur un côté supérieur d'un autre élément de couverture de toit (17), et **en ce que** le moyen de fixation (24 ; 24') est guidé à travers l'orifice (9) du renflement (8).
